# EUROPÄISCHE PATENTANMELDUNG

(11) **EP 0 826 471 A2**
(43) Veröffentlichungstag der Anmeldung: **04.03.1998**
(21) Anmeldenummer: 97890154.4
(22) Anmeldetag: 30.07.1997
(51) Int. Cl.: B27N 3/00

(54) **Verfahren zur Aufbereitung von Faserplattenabfällen**

(30) Priorität: 27.08.1996 AT 1525/96
(71) Anmelder: FUNDER INDUSTRIE GESELLSCHAFT M.B.H., A-9300 St. Veit a.d. Glan (AT)
(72) Erfinder: Zimmer, Helmut, Ing., 9400 Wolfsberg (DE)
(74) Vertreter: Pawloy, Heinrich, Dr.

(57) **Zusammenfassung**

Beschrieben wird ein Verfahren zur Aufbereitung von Faserplattenabfällen im Trocken- oder Naßverfahren ohne Refineraggregate, wobei die Zerfaserung nach einer drucklosen Wärmebehandlung in einem flüssigen Medium und anschließender Druckbehandlung durch Dampfexpansion erfolgt, und eine Vorrichtung zur Durchführung des Verfahrens.

## Beschreibung

Die vorliegende Erfindung betrifft ein Verfahren zur Aufbereitung von Faserplattenabfällen im Trocken- oder Naßverfahren ohne Refineraggregate.

Bei der Herstellung von Faserplatten mit thermo-mechanischem Aufschluß, nach dem Naß- oder Trockenverfahren, fallen während der Herstellung, der Qualitätskontrolle sowie bei der Endfertigung (z.B. bei der Zuschnittsäge) erhebliche Mengen an Abfällen an. Diese Abfälle werden vorwiegend als Brennstoff zur thermischen bzw. elektrischen Energiegewinnung eingesetzt. Fallweise werden die Faserplattenabfälle auch, je nach Anlage und Qualitätsklasse der hergestellten Faserplatten, nach entsprechender Zerkleinerung mit den Hackschnitzeln für die Produktion vermischt, aufgeschlossen und dem Produkt wieder zugeführt. Diese Beimischung erlaubt jedoch nur die Herstellung von minderwertigeren Faserplatten.

Bei der Zumischung von Faserplattenabfällen zu den Hackschnitzeln für die Faserplattenproduktion nach dem Stand der Technik werden die Abfälle gemeinsam mit den Holz-Hackschnitzeln in einem Druckzerfaserer erst thermisch behandelt und anschließend in einem Refiner, mit hohem elektrischen Energieaufwand, zwischen Mahlscheiben aufgeschlossen. Da die Faserplattenabfälle keine Faserorientierung haben, werden sie bei diesem Prozeß größtenteils zu Schlamm, O-Fasern bzw. nur zu Füllmaterial bei der späteren Faserplattenherstellung zerkleinert. Weiters wird durch den dadurch entstehenden hohen Schlammanteil der Prozeß-Wasserkreislauf stark belastet. Durch diese höhere Trockensubstanz-Wasserkreislaufbelastung wird auch der Entwässerungseffekt auf der Langsiebmaschine negativ beeinflußt, die Langsiebmaschinengeschwindigkeit muß unter Umständen dadurch reduziert werden, was in weiterer Folge zu Kapazitätseinbußen führen kann. Der erhöhte Schlamm- bzw. O-Faseranteil in der Faserplatte kann auch zu erheblichen qualitativen Beeinträchtigungen bei der Faserplattenqualität, im besonderen bei der Biegefestigkeit, der Wasseraufnahme sowie der Dickenquellung, führen. Bedingt durch diese Auswirkungen werden Faserplattenabfälle in der Regel nicht im Produktionsprozeß eingesetzt.

Gemäß der EP-0 522 309 A1 werden stückige Holzpartikel in einem Kocher unter Wasserdampfüberdruck gekocht und anschließend sofort, ebenfalls unter Überdruck, in einen Aufbereiter überführt, in welchem die Holzpartikel zu heißen und nassen Fasern zerkleinert werden (vgl. Spalte 1, Zeilen 25 bis 29). Aus diesem Aufbereiter gelangen die noch immer unter Druck stehenden Fasern dann in eine einen Blasgang aufweisende Blasvorrichtung und schließlich in einen Abscheider.

Kocher, Aufbereiter und Blasgang stehen dabei unter Druck, beispielsweise 8 bar. Gemäß Spalte 2, Zeilen 38 bis 44, soll die am Ende des Blasgangs erfolgende Expansion und der dabei eintretende Druck- und Temperaturverlust die Fasern abkühlen und trocknen.

Auch in Spalte 4, Zeilen 31 bis 36 der EP-0 522 309 Al wird geoffenbart, daß im Kocher (1) das Erweichen der Holzpartikel erfolgt, welche dann in den Aufbereiter (2) überführt werden. Der Aufbereiter (2) kann dabei mit Mahlscheiben oder dgl. versehen sein, um den Aufschluß der Holzpartikel zu feinen Fasern zu ermöglichen. Kocher (1), Aufbereiter (2) und Blasgang (3) stehen dabei unter Überdruck (vgl. Zeilen 31 bis 46).

Gemäß der DE 1 528 239 Al wird der feuchte Faserstoff erst nach der Defibrierung bzw. Vermahlung des pflanzlichen Ausgangsmaterials, während es sich in einer Dampfatmosphäre bei einer Temperatur von mehr als 100°C befindet, in einer Expansionsdüse zu einem niedrigeren Druck, gegebenenfalls bis zum atmosphärischen Druck, expandiert. Dem aus der Expansionsdüse kommenden Faserstoff wird dabei unter Einwirkung der Ausdehnung des Dampfes eine Geschwindigkeitskomponente erteilt, wodurch der Faserstoff in den Luftraum einer Ausblasekammer geschleudert wird. Zweifelsohne erfolgt auch gemäß der DE 1 528 239 Al der Aufschluß des eingesetzten Ausgangsmaterials vor der Expansionsphase.

Das Ziel der vorliegenden Erfindung ist, die Faserplattenabfälle so aufzubereiten, daß zu Naturholz annähernd gleichwertige Fasern entstehen und so wieder anteilig dem Produktionsprozeß beigemischt werden können. Weiters sollen negative Beeinträchtigungen bei der Herstellung von Faserplatten vermieden sowie die Qualität des Endprodukts verbessert werden. Die für die Zerfaserung der Faserplattenabfälle erforderliche elektrische Energie soll auf ein Minimum reduziert und gleichzeitig soll entsprechend wertvolles Rohmaterial (Hackgut) eingespart werden.

Dieses Ziel wird erfindungsgemäß dadurch erreicht, daß die Zerfaserung der zerkleinerten Faserplattenabfälle nach einer drucklosen Wärmebehandlung in einem flüssigen Medium und anschließender Druckbehandlung durch Dampfexpansion erfolgt. Durch die bei einer solchen Dampfexpansion erzielte Druckdifferenz werden die Abfälle schonend in Einzelfasern zerlegt. Elektrische Energie ist für die Zerfaserung nicht erforderlich. Die nach dem beschriebenen Verfahren hergestellten Fasern weisen im Mikroskop eine sehr gleichmäßige Struktur - ähnlich wie aus Holz hergestellte Fasern - auf, haben jedoch keine so stark ausgebildeten fibrillierten Faserenden. Die Oberfläche der nach wie vor vorhandenen Faserbündel ist wesentlich glatter, wie bei reinen Holzfasern. Die Mattenstärke nach der Langsiebmaschine ist etwa dünner als bei einer reinen Holzfasermatte.

Vorzugsweise dauert die Wärmebehandlung der Faserplattenabfälle in einem flüssigen Medium 10 bis 120 Minuten. Dabei kann als flüssiges Medium Wasser, organische Lösungsmittel mit entsprechendem Siedepunkt oder wässerige Lösungen von organischen Lösungsmitteln verwendet werden.

Gemäß einer bevorzugten Ausführungsform der vorliegenden Erfinfindung liegt die Temperatur des flüssigen Mediums während der Wärmebehandlung drucklos zwischen 50 und 95°C.

Günstig ist, wenn zur Wärmebehandlung der Faserplattenabfälle das bei der Faserplattenherstellung anfallende Prozeßwasser verwendet wird. Dadurch kann einerseits der Energieverbrauch auf einem Minimum gehalten werden, da das Prozeßwasser bereits mit erhöhter Temperatur vorliegt, andererseits wird auch der Wasserverbrauch verringert.

Weiters ist vorzuziehen, wenn die an die Wärmebehandlung anschließende Druckbehandlung bei Drücken von 5 bis 20 bar Sattdampf erfolgt. Erfahrungsgemäß wird bei einer Expansion von derartigen Drücken auf den Normaldruck den an die aufgeschlossenen Fasern gestellten Qualitätsanforderungen am besten entsprochen.

Schließlich können die aufgeschlossenen Fasern vor Zumischung in den Produktionsstrom mit Prozeßwasser verdünnt bzw. vor Zumischung in den Produktionsstrom getrocknet werden.

Weiters betrifft die vorliegende Erfindung auch eine Vorrichtung zur Durchführung des erfindungsgemäßen Verfahrens, wobei eine Koch-Transportschnecke (2) über mechanische Fördereinrichtungen (5) und gegebenenfalls einem Zwischensilo (6) sowie über eine konisch sich verjüngende Transportschnecke (7) mit perforiertem Schneckenrohr mit einem Dämpfbehälter (8) mit Rührwerk (9) zum Transport von zerkleinerten Faserplattenabfällen leitungsmäßig verbunden ist, wobei der Dämpfbehälter (8) weiters eine vorzugsweise verstellbare Expansionsdüse (11) aufweist.

Dabei ist vorzugsweise anschließend an den Dämpfbehälter (8) eine Rohrleitung (12) zu einem Hoch-Konsistenzentstipperaggregat (13) zur Egalisierung und zum Auflösen von zu großen Faserbündeln vorgesehen.

### Beschreibung des Verfahrens:

Die bei der Herstellung von Faserplatten in der Faserplattenanlage anfallenden Faserplattenabfälle, aus den Bereichen der Qualitätsprüfung, Bruck- und Ausschußplatten, Abfälle von Zuschnittsägen sowie Rücklieferungen von Verarbeitern, werden in geeigneten Hackmaschinen oder Shredder zu einem gleichmäßigen Granulat zerkleinert und von anhaftendem Staub getrennt. Vorzugsweise werden für diesen Vorgang Trommelhacker und Schwingsiebe verwendet. Das dadurch erhaltene Granulat soll vorzugsweise ein Format von üblichen Holz-Hackschnitzeln haben. Es ist jedoch auch möglich, je nach Art des Abfalls, kleinere und größere Abfälle zu verarbeiten. Die Abfälle sollen jedoch nicht größer sein als etwa 50 x 100 mm, um Probleme bei Förderung und Lagerung zu vermeiden.

Zur weiteren Aufbereitung der Abfälle werden diese dann über einen Dosiersilo (1) einer beheizten, mit Prozeßwasser gefüllten Koch-Transportschnecke (2) zugeführt. Die Abfälle werden bei einer Temperatur von 50 bis 95°C über einen Zeitraum von 10 bis 20 Minuten drucklos behandelt. Um den laufenden Wasserverbrauch zu ergänzen, ist die Koch-Transportschnecke (2) vorzugsweise mit einer automatischen Niveauregelung (3) versehen. Die Beheizung der Kochschnecke kann üblicherweise mit Prozeßwasser (4) in einem separaten Kreislauf direkt aus dem Siebschiff der Langsiebmaschine erfolgen, so daß hierfür keine zusätzliche Energie erforderlich ist. Nach Ablauf der Behandlungszeit werden die vorbehandelten Faserplattenabfälle über mechanische Fördereinrichtungen (5), vorzugsweise Schnecken- oder Bandförderer, zu einem Zwischensilo (6) transportiert.

Von diesem Behälter werden die Faserplattenabfälle in eine konisch sich verjüngende Transportschnecke (7) dosiert. Das Schneckenrohr dieser Einrichtung ist perforiert und hat zur Ableitung von Überschußwasser entsprechende Bohrungen. Der bei der Verdichtung in der konischen Transportschnecke entstehende Pfropfen ist gleichzeitig Abdichtung zu dem anschließenden Dämpfbehälter (8). In dem Dämpfbehälter in vertikaler oder horizontaler Anordnung werden die Faserplattenabfälle bei einem Dampfdruck von 5 bis 20 bar über einen Zeitraum von 2 bis 15 min thermisch behandelt. In dem Dämpfbehälter befindet sich ein langsam laufendes Rührwerk bzw. bei horizontaler Anordnung eine Transportschnecke (9), um Verstopfungen und Brückenbildungen zu vermeiden. Im Austrittsbereich desselben ist in rasch laufender Rotationskörper (10) zur Gewährleistung eines gleichmäßigen Transportes der Abfälle zu einer Expansionsdüse (11) vorgesehen.

Die Düse ist zur Anpassung an Produktions- und Qualitätsbedingungen verstellbar ausgeführt. Nachdem bei der vorbeschriebenen Expansion fallweise Faserklumpen bzw. Faserplattenreststücke bestehen bleiben können, wird nach der Expansionsphase das Gemisch über eine Rohrleitung (12) einem Hoch-Konsistenzentstipperaggregat (13) mit offenen Entstipperscheiben zugeführt. Die nach der Nachbehandlung anfallenden Fasern werden, wie bei den herkömmlichen Herstellungsprozessen von Faserplatten, entweder verdünnt oder getrocknet, dem Produktionsstrom beigemischt.

Für die Herstellung von Hartfaserplatten werden im erfindungsgemäßen Verfahren für die Verarbeitung von aufbereiteten Faserplattenabfällen vorzugsweise 5 bis 30 % der Stoffmasse beigemischt. Üblicherweise fallen in einem Faserplattenwerk solche Mengen an, daß im Durchschnitt ca. 10 % zudosiert werden. Zu bemerken ist, daß in diesem Bereich keine Beeinträchtigungen in den Qualitätswerten, entsprechend den DIN-Normen, festzustellen sind.

Bei dem Prozeß zur Herstellung der Faserplatten können alle üblichen Additive und Bindemittel ohne Beeinträchtigung zum Einsatz kommen.

Bei erfindungsgemäßer Aufbereitung der Faserplattenabfälle können die so erzeugten Fasern in der fertigen Faserplatte nicht mehr erkannt bzw. festgestellt werden.

Bei der Mahlung der Holzfasern, für die Herstellung der Faserplatten, muß gegebenenfalls auf die Faserstruktur der aufgeschlossenen Faserplattenabfälle Rücksicht genommen werden.

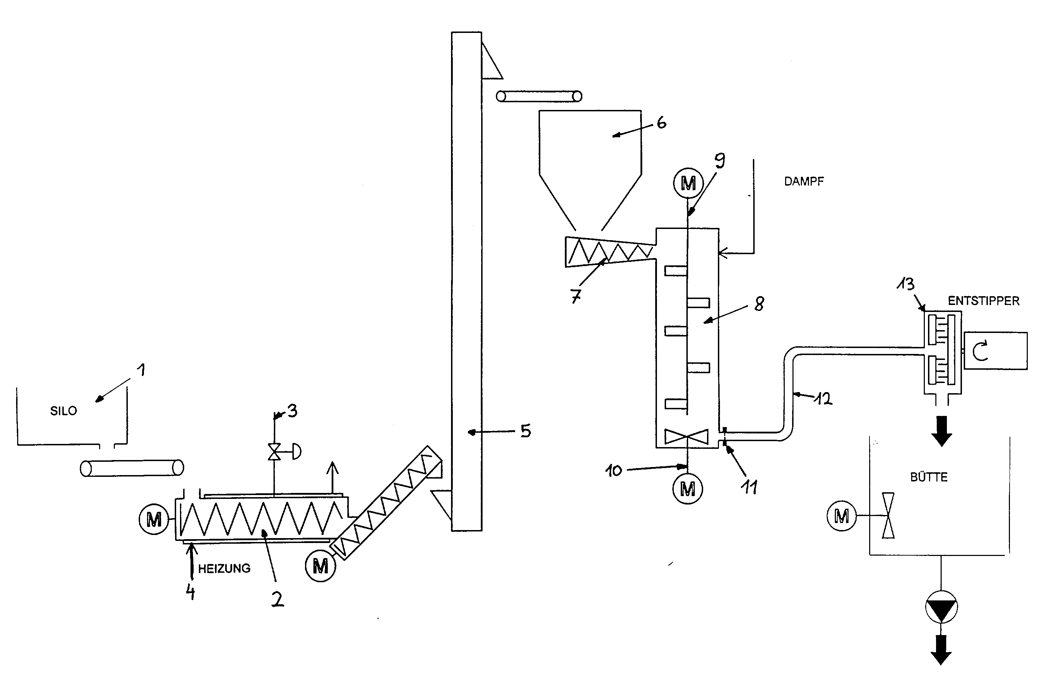

## Patentansprüche

1. Verfahren zur Aufbereitung von Faserplattenabfällen im Trokken- oder Naßverfahren ohne Refineraggregate, dadurch gekennzeichnet, daß die Zerfaserung der zerkleinerten Faserplattenabfälle nach einer drucklosen Wärmebehandlung in einem flüssigen Medium und anschließender Druckbehandlung durch Dampfexpansion erfolgt.

2. Verfahren nach Anspruch 1, dadurch gekennzeichnet, daß die Wärmebehandlung der Faserplattenabfälle in einem flüssigen Medium 10 bis 120 Minuten dauert.

3. Verfahren nach Anspruch 1 oder 2, dadurch gekennzeichnet, daß die Temperatur des flüssigen Mediums während der Wärmebehandlung drucklos zwischen 50 und 95°C liegt.

4. Verfahren nach einem der Ansprüche 1 bis 3, dadurch gekennzeichnet, daß zur Wärmebehandlung der Faserplattenabfälle das bei der Faserplattenherstellung anfallende Prozeßwasser verwendet wird.

5. Verfahren nach einem der Ansprüche 1 bis 4, dadurch gekennzeichnet, daß die an die Wärmebehandlung anschließende Druckbehandlung bei Drücken von 5 bis 20 bar Sattdampf erfolgt.

6. Verfahren nach einem der Ansprüche 1 bis 5, dadurch gekennzeichnet, daß die aufgeschlossenen Fasern vor Zumischung in den Produktionsstrom mit Prozeßwasser verdünnt werden.

7. Verfahren nach einem der Ansprüche 1 bis 5, dadurch gekennzeichnet, daß die aufgeschlossenen Fasern vor Zumischung in den Produktionsstrom getrocknet werden.

8. Vorrichtung zur Durchführung des Verfahrens nach einem der Ansprüche 1 bis 7, dadurch gekennzeichnet, daß eine Koch-Transportschnecke (2) über mechanische Fördereinrichtungen (5) und gegebenenfalls einem Zwischensilo (6) sowie über eine konisch sich verjüngende Transportschnecke (7) mit perforiertem Schneckenrohr mit einem Dämpfbehälter (8) mit Rührwerk (9) zum Transport von zerkleinerten Faserplattenabfällen leitungsmäßig verbunden ist, wobei der Dämpfbehälter (8) weiters eine vorzugsweise verstellbare Expansionsdüse (11) aufweist.

9. Vorrichtung nach Anspruch 8, dadurch gekennzeichnet, daß weiters anschließend an den Dämpfbehälter (8) eine Rohrleitung (12) zu einem Hoch-Konsistenzentstipperaggregat (13) zur Egalisierung und Nachzerkleinerung von zu großen Faserbündeln vorgesehen ist.
